# EUROPÄISCHE PATENTSCHRIFT

(11) **EP 2 431 727 B1**
(45) Veröffentlichungstag und Bekanntmachung des Hinweises auf die Patenterteilung: **19.08.2015**
(21) Anmeldenummer: 10009827.6
(22) Anmeldetag: 17.09.2010
(51) Int. Cl.: G01N 1/31, G01N 1/38, B01L 3/00, B01F 11/00

(54) **Vorrichtung zum Benetzen von Objekten**
Device for dampening objects
Dispositif de mise en réseau d'objets

(43) Veröffentlichungstag der Anmeldung: 21.03.2012
(73) Patentinhaber: Zytomed Systems GmbH, 14163 Berlin (DE)
(72) Erfinder: Weyrauch, Kerstin, 14089 Berlin (DE); Debel, Karsten, 22941 Bargteheide (DE); Dittmer, Thomas, 14129 Berlin (DE)
(74) Vertreter: Patentanwälte Bressel und Partner mbB

(56) Entgegenhaltungen:
- WO-A2-2005/116256
- US-A1- 2003 107 946
- US-A1- 2006 003 440
- US-A1- 2006 115 381
- US-A1- 2006 166 371

## Beschreibung

Die vorliegende Erfindung betrifft eine Vorrichtung zum Benetzen von Objekten, insbesondere von biologischen Proben, mit einer Flüssigkeit, insbesondere einer Flüssigkeit mit einem Nachweismittel, eine Anordnung zum Untersuchen von Objekten, insbesondere von biologischen Proben, unter Benetzung des Objekts mit einer Flüssigkeit, sowie ein Verfahren zum Benetzen von Objekten, insbesondere von biologischen Proben, mit einer Flüssigkeit, die ein Nachweismittel enthalten kann.

Verfahren zum Benetzen von Objekten, insbesondere biologischen Proben mit einer Flüssigkeit, und Verfahren zur Durchführung chemischer, biologischer und biochemischer Reaktionen in dünnen Flüssigkeitsfilmen sind aus dem Stand der Technik bekannt.

US 5910288 beschreibt ein Verfahren und eine Vorrichtung zum Mischen eines dünnen Films aus Fluid, insbesondere eines chemischen, biochemischen oder biologischen Fluids, das einer Reaktion unterzogen wird, wie sie bei einer chemischen, biochemischen oder biologischen Untersuchung auftritt. Angegeben wird eine Vorrichtung zum Mischen eines dünnen Fluidfilms, insbesondere eines chemischen, biologischen oder biochemischen Fluids, das einer Reaktion unterzogen wird. Die Vorrichtung weist eine erste Oberfläche mit einer Innenfläche und eine zweite Oberfläche mit einer Innenfläche auf. Die zweite Oberfläche ist in unmittelbarer Nähe zur ersten Oberfläche derart angeordnet, dass die Innenfläche der ersten Oberfläche in gegenüberliegender Beziehung zu der Innenfläche der zweiten Oberfläche ist und die zwei Innenflächen eine dünne Fluidkammer zwischen den zwei Oberflächen definieren. Optional ist eine Öffnung in einer der Oberflächen zum Einbringen von Fluid in die Fluidkammer vorhanden. Ferner kann ein Mischmechanismus zum Mischen von Fluid in der Fluidkammer vorhanden sein, wobei der Mischmechanimus die Innenfläche von zumindest einer Oberfläche relativ zu der Innenfläche der anderen Oberfläche derart bewegt, dass ein Mischen innerhalb der Fluidkammer eingeleitet wird.

DE10218988 betrifft eine Vorrichtung und ein Verfahren zum Benetzen von Objekten, insbesondere biologischen Proben mit einer Flüssigkeit, mit einer Einrichtung zum Tragen eines Objektträgers, der von einer Plattform beabstandet ist. Um den Flüssigkeitsbedarf zu reduzieren, wird der Objektträger mit einer weiteren Einrichtung relativ zur Plattform angehoben oder abgesenkt.

US2006115381, US2006166371 und US2003107946 offenbaren weitere Benetzungs und Mischvorrichtungen.

Eine Aufgabe der Erfindung war die Bereitstellung einer Vorrichtung zum Benetzen von Objekten, insbesondere von biologischen Proben, mit einer Flüssigkeit, die möglichst einfach aufgebaut ist. Die Anzahl beweglicher Einzelteile sollte dabei möglichst minimiert werden. Desweiteren sollte die Vorrichtung leicht mit Untersuchungsflüsslgkelten befüllbar und wieder entleerbar sein.

Die Aufgabe wird durch eine Vorrichtung mit den Merkmalen des Anspruchs 1 gelöst. Vorteilhafte Weiterbildungen der Vorrichtung sind Gegenstand der Unteransprüche.

Ferner stellt die Erfindung eine Anordnung zum Untersuchen von Objekten zur Verfügung, und beschreibt ein Verfahren zur Benetzung von Objekten, in welchem die Vorrichtung eingesetzt wird.

Die Erfindung betrifft eine Vorrichtung zum Benetzen von Objekten gemäß Anspruch 1.

Nach der grundlegenden Idee der Erfindung ist die Platte derart ausgestaltet, dass durch Auflegen der Platte mit der zweiten Oberfläche auf das zu benetzende Objekt, Ausübung eines Anpressdrucks auf einen umlaufenden Randbereich der Platte, und Hindurchtreten von Flüssigkeit von der ersten Seite durch zumindest eine der Durchtrittsöffnungen zu der zweiten Seite an der zweiten Seite ein Flüssigkeitsraum zwischen der Platte und dem Objekt gebildet wird. Durch die eintretende Flüssigkeit wird das Objekt benetzt. Der Flüssigkeitsraum kann durch zugeführte Flüssigkeit auch weiter befüllt und vergrößert werden. Durch eine weitere Durchtrittsöffnung kann eventuell vorhandene Luft aus dem gebildeten Flüssigkeitsraum nach Außen, d.h. zur ersten Seite entweichen, Die weitere Durchtrittsöffnung kann auch dazu dienen, Flüssigkeit aus dem Flüssigkeitsraum zu entfernen. Nach Entfernung von Flüssigkeit kann wieder Flüssigkeit durch eine der Öffnungen zugeführt werden. Vorzugsweise wird eine der Druchtrittsöffnungen nur zur Flüssigkeitszufuhr verwendet und eine andere nur zur Entfernung von Luft und/oder Flüssigkeit.

Das beschriebene Funktionsprinzip wird durch die spezielle Ausgestaltung der Platte ermöglicht. Die Platte ist flexibel und elastisch. Dadurch kann sie sich zur Bildung eines Flüssigkeitsraums nach oben dehnen, wenn Flüssigkelt durch eine der Öffnungen zur zweiten Seite geleitet wird. Wenn Flüssigkeit wieder aus dem Flüssigkeitsraum entfernt wird, nimmt die Platte durch ihre elastischen Eigenschaften wieder ihre Ursprungsform ein. Weiterhin ist die Platte aus einem abdichtenden Material gefertigt und weist abdichtende Eigenschaften auf wenn auf einen umlaufenden Randbereich der Platte ein Druck ausgeübt wird. Durch den Druck wird der Flüssigkeitsraum nach Außen abgedichtet. Mit dem Begriff "Randbereich" kann der äußerste Rand bzw. die Kante der Platte gemeint sein, aber dies ist nicht zwingend. Der Druck kann auch auf einen etwas weiter innen liegenden, das zu untersuchende oder den zu untersuchenden Teil des Objekts umlaufenden Bereich der Platte ausgeübt werden.

Objekte und biologische Proben, die mit der Vorrichtung untersucht werden können, umfassen beispielsweise DNA, RNA, Oligonukleotide, Proteine, Peptide, Haptene, Antigene, Antikörper, biologisches Gewebe von Tieren, Menschen und Pflanzen, Zellextrakte Mikroorganismen, wie zum Beispiel Bakterien und Pilze, Zellen- und Zellbestandteile.

Beispielhafte und bevorzugte Anwendungsgebiete für die erfindungsgemäße Vorrichtung sind: Immunhistochemie/Immunhistologie, molekularbiologische Hybridisierungen mit DNA oder RNA, einschließlich in-situ Hybridisierungen, beispielsweise mit Gewebe, Zellen und Chromosomen, Western-Blot, Southern-Blot, Northern-Blot, Immunassays, wie z.B. ELISA, Radioimmunassays, (bio)chemische Nachweisreaktionen, beispielsweise solche, die eine Farbstoffreaktion oder eine Anfärbung beinhalten, Nukleinsäure-Protein-Bindungsverfahren, und Protein-Protein-Bindungsverfahren.

Als Nachweismittel kommen insbesondere und ohne Beschränkung in Betracht: DNA und RNA (Sonden), RNA-DNA-Hybride, Oligonukleotide, Proteine, Antikörper, Färbemittel, Reagenzien, und Kombinationen, Derivate, Fragmente und Abwandlungen davon. Die genannten Substanzen können unmarkiert sein oder radioaktiv, mit einem Farbstoff, einem Label oder anderweitig markiert sein.

Als Flüssigkeiten kommen insbesondere solche in Betracht, in denen die oben genannten Nachweismittel üblicherweise suspendiert oder gelöst werden. Besonders bevorzugt sind wäßrige Flüssigkeiten, insbesondere auf einen bestimmten pH Wert und/oder sonstige Parameter, wie z.B. Salzkonzentration, eingestellte Flüssigkeiten und Pufferlösungen.

Die Vorrichtung weist eine flexible Platte aus elastischem Material auf, das nach mechanischer Verformung in seine Ausgangsform zurückkehrt. Vorteilhafte Materialien sind beispielsweise Gummi oder Silikon. Die Platte kann verschiedene Formen aufweisen, wie zum Beispiel rechteckig, quadratisch, oval oder rund. Die Dicke der Platte beträgt vorzugsweise 0,5 bis 1 mm.

Die erste Oberfläche an einer ersten Seite der Platte ist dem zu benetzenden Objekt abgewandt und die zweite Oberfläche an einer zweiten Seite der Platte ist dem zu benetzenden Objekt zugewandt.

Zur Untersuchung eines Objekts wird die flexible Platte der Vorrichtung mit ihrer zweiten Oberfläche auf derart auf das Objekt gelegt, dass die zweite Oberfläche das Objekt bedeckt.

Danach wird ein Anpressdruck auf den umlaufenden Randbereich der Platte nach unten, in Richtung des Objektes, ausgeübt. Der Anpressdruck kann beispielsweise mit einer externen Anpresseinrichtung ausgeübt werden, die auf die erste Oberfläche der flexiblen Platte im umlaufenden Randbereich aufgesetzt wird. Die Anpresseinrichtung ist vorzugsweise an die Form der Platte angepasst. Bei einer rechteckigen Platte hat die Anpressvorrichtung somit vorzugsweise eine rechteckige Form, die auf den umlaufenden Randbereich aufgesetzt wird. Der Anpressdruck kann von Hand ausgeübt werden. Vorteilhafter ist allerdings eine mechanische Anpresseinrichtung, beispielsweise eine Klemm- oder Spannvorrichtung.

Anschließend wird Flüssigkeit durch zumindest eine der Durchtrittsöffnungen zu der zweiten Seite geleitet und tritt an der zweiten Oberfläche aus. Dazu ist diese Durchtrittsöffnung, auch bezeichnet als erste Durchtrittsöffnung, mit einer Befülleinrichtung verbindbar.

Die Durchtrittsöffnungen verlaufen von der ersten Seite zu der zweiten Seite und münden an der zweiten Oberfläche. Der Querschnitt der Durchtrittsöffnungen kann sich über ihren Verlauf ändem. So kann sich die Durchtrittsöffnung beispielsweise zur zweiten Seite hin in ihrem Querschnitt erweitern.

Durch ihre flexible Eigenschaft kann sich die Platte bei Austritt von Flüssigkeit aus der ersten Durchtrittsöffnung nach oben dehnen und an ihrer zweiten Seite wird ein Flüssigkeitsraum zwischen der Vorrichtung und dem Objekt gebildet. Der Flüssigkeitsraum kann mit zunehmender Menge eintretender Flüssigkeit vergrößert werden, indem sich die flexible Platte weiter dehnt. Aufgrund des Anpressdrucks, der auf den umlaufenden Randbereich der Platte in Richtung des Objektes ausgeübt wird, ist der Flüssigkeitsraum zum Rand der flexiblen Platte hin abgeschlossen. In dem Flüsslgkeltsraum wird das Objekt benetzt und die erwünschte Untersuchung kann stattfinden, beispielsweise eine Hybridisierung einer Gewebeprobe mit einer DNA/RNA Sonde oder einem Antikörper.

Durch eine zweite Durchtrittsöffnung kann Flüssigkeit bei Bedarf wieder aus dem Flüssigkeitsraum entfernt werden, beispielsweise durch Absaugen. Dazu ist die zweite Durchtrittsöffnung mit einer Absaugeinrichtung verbindbar. Der Zyklus aus Flüssigkeitszugabe durch eine erste Durchtrittsöffnung und Flüssigkeitsentfernung aus einer zweiten Durchtrittsöffnung kann beliebig oft wiederholt werden. Dabei können nacheinander gleiche oder verschiedene Flüssigkeiten verwendet werden. Beispielsweise kann In einem ersten Zyklus eine DNA/RNA Sonde zu einer Gewebeprobe geleitet werden um diese zu benetzen und in einem weitem Zyklus kann nicht-hybridisierte Sonde mit einem Pufferlösung oder einer Salzlösung ausgespült werden. In einer anderen Variante kann in einem ersten Schritt ein Antikörper an eine biologische Probe angebunden werden, und in einem zweiten Schritt wird nicht gebundener Antikörper durch Spülen entfernt. Grundsätzlich sind alle Varianten und Abfolgen von Behandlungsschritten in flüssigen Medien durchführbar, die bei biologischen, chemischen und gentechnologischen Nachweisreaktionen und Assays üblich sind.

Die zuvor beschriebenen Schritte und Reaktionen werden bei Temperaturen durchgeführt, die für solche Reaktionen üblich sind. Die Temperatur ist im oberen Bereich durch den Dampfdruck der verwendeten flüssigen Medien, durch die Stabilität des untersuchten Objekts und der verwendeten Reagenzien sowie durch die Wärmestabilität der Vorrichtung begrenzt. Wenn die Vorrichtung aus Silikon gefertigt ist, beträgt die bevorzugte maximale Temperatur bis 80°C.

In einer speziellen Ausführungsform befindet sich das Objekt auf einem Objektträger, beispielsweise aus Glas, und der umlaufende Randbereich der flexiblen Platte liegt auf der Oberfläche des Objektträgers. Hierbei ist die zweite Oberfläche der Platte größer als die Oberfläche des Objekts und ragt über das Objekt hinaus, und das Objekt wird von der Platte und dem Objektträger umschlossen. Wird anschließend Flüssigkeit durch zumindest eine der Durchtrittsöffnungen geleitet, so wird ein Flüssigkeitsraum zwischen der flexiblen Platte und dem Objektträger und dem darauf liegenden Objekt gebildet.

Im speziellen kann auch eine Anordnung mehrerer nebeneinander liegender Objekte, ein sogenanntes Array mit einer erfindungsgemäßen Vorrichtung untersucht werden.

In einer speziellen Ausführungsform der Vorrichtung ist die Platte einstückig mit einem Rahmen verbunden, der an der ersten Seite hervorragt, sodass der Anpressdruck über den Rahmen ausübbar ist. Der Rahmen sitzt auf der ersten Oberfläche auf der ersten Seite der Platte und auf dem umlaufenden Randbereich. In einer bevorzugten Ausführungsform verläuft der Rahmen entlang der Plattenkante. Dadurch erhält die Vorrichtung eine Wannenform, mit der flexiblen Platte als Wannenboden und dem Rahmen als Wannenrand.

Die Vorrichtung mit Rahmen wird dazu vorzugsweise in eine Anpressvorrichtung eingesetzt, die über einen mechanischen Anpressmechanismus, beispielsweise einen Klemm- oder Spannmechanismus verfügt. Durch den Mechanismus wird Druck auf den Rahmen ausübt, wodurch der umlaufende Randbereich nach unten gepresst wird, beispielsweise auf das Objekt oder auf einen Objektträger.

Der Rahmen kann aus einem Einzelteil bestehen, dass mit der flexiblen Platte verbunden wurde. In einer besonders bevorzugten Ausführungsform sind flexible Platte und Rahmen einteilig gefertigt. Im Fall von Silikon als flexibles Material wird die Vorrichtung vorzugsweise in einer Gießform hergestellt, in welcher der Rahmen und die flexible Platte in einem Stück gegossen und anschließend zu einer flexiblen Vorrichtung verfestigt werden. Es ist ferner möglich, Rahmen und Platte aus einem Block festen Materials herauszuarbeiten.

In noch einer speziellen Ausführungsform, die mit den obigen Ausführungsformen kombinierbar ist, weist die Vorrichtung auf der ersten Oberfläche der Platte angebrachte Stege zur Versteifung auf. Solche Stege können sich über Teile der Platte oder die gesamte Platte erstrecken, wobei der Randbereich der Platte vorzugsweise nicht mit Stegen versehen ist. In einer besonders bevorzugten Variante sind die flexible Platte und die Stege einteilig gefertigt, beispielsweise aus gegossenem Silikon.

In einer weiteren Ausführungsform, die mit den obigen Ausführungsformen kombinierbar ist, weist die Vorrichtung einen oder mehrere Kanäle auf, die sich entlang der zweiten Seite der flexiblen Platte erstrecken, die zur zweiten Oberfläche der Platte hin offen sind. Die Kanäle erstrecken sich der Länge nach entlang der zweiten Seite und haben, im Querschnitt betrachtet, die Form einer Rinne, die zur Oberfläche hin offen ist. In einer bevorzugten Ausführungsform sind die Kanäle mit den Durchtrittsöffnungen In der Platte verbunden.

Die Kanäle dienen einer noch effizienteren Verteilung der Flüssigkeit, die durch eine der Durchtrittsöffnungen hindurchtritt. Wenn die flexible Platte mit ihrer zweiten Oberfläche auf ein zu untersuchendes Objekt aufgesetzt wird, kann die zweite Oberfläche unter Umständen bündig mit dem Objekt, und mit einem gegebenenfalls vorhandenen Objektträger, abschließen. Dadurch wird die Verteilung der Flüssigkeit über die gesamte Fläche des Untersuchungsobjektes verlangsamt. Erst wenn genügend Flüssigkeit in den gebildeten Flüssigkeitsraum eingeleitet wird, wird sich die flexible Platte nach oben dehnen und Raum für die Verteilung von Flüssigkeit über das gesamte Objekt frei machen.

Die Verteilung der Flüssigkeit kann durch die erwähnten Kanäle beschleunigt werden. Die Kanäle ermöglichen auch, dass weniger Flüssigkeit in den Flüssigkeitsraum eingeleitet werden muss und dass ein niedrigerer Flüssigkeitsdruck erforderlich ist. Wenn Flüssigkeit durch eine der Durchtrittsöffnungen eingeleitet wird, verteilt sie sich in dem mit der Durchtrittsöffnung verbundenen Kanal oder Kanälen. Wenn die flexible Platte durch zugeleitete Flüssigkeit nur leicht nach oben gedehnt wird, wird die Flüssigkeit effizient im gesamten Flüssigkeitsraum verteilt.

Ebenfalls vorteilhaft sind die Kanäle zur schnelleren Entfernung von Flüssigkeit aus dem Flüssigkeitsraum. Insbesondere wenn sich die zweite Oberfläche soweit abgesenkt hat, dass sie die Probe und/oder die Oberfläche eines Objektträgers berührt, kann verbliebene Flüssigkeit in den Kanälen gesammelt und durch die Kanäle abgeführt werden.

In einer besonders bevorzugten Ausführungsform sind mehrere Kanäle vorhanden, die die eine erste Durchtrittsöffnung mit einer zweiten Durchtrittsöffnung verbinden und einen wellenförmigen Verlauf haben.

Wenn mehrere Kanäle vorhanden sind, können diese Verbindungen untereinander aufweisen, wie zum Beispiel Kreuzungen oder Verbindungskanäle, wodurch eine besonders gute Verteilung von Flüssigkeit in der Flüssigkeitskammer und Benetzung des Objekts erreicht wird.

In noch einer weiteren Ausführungsform weist die Vorrichtung eine Mischeinrichtung auf, die bei Zusammenwirken mit einer Antriebseinrichtung ein Anheben und/oder Absenken von einem oder mehreren lokalen Bereichen der Platte bewirkt, wobei die lokalen Bereiche den Flüssigkeitsraum beranden, sodass durch das Anheben und/oder Absenken die Flüssigkeit In dem Flüssigkeitsraum bewegt wird. Die Mischeinrichtung ist vorzugsweise an der Platte selbst angebracht. Mischeinrichtung und Antriebseinrichtung sind voneinander trennbar. Der Begriff Zusammenwirken bedeutet, dass die Mischeinrichtung und die Antriebseinrichtung zueinander in einer physikalischen Wechselwirkung stehen, durch die eine Bewegung der Antriebseinrichtung auf die Mischeinrichtung übertragen wird. Insbesondere kann die Wechselwirkung durch eine mechanische, elektrische, magnetische oder elektromagnetische Kopplung übertragen werden.

Prinzipiell ist ein Anheben und/oder Absenken von einem oder mehreren lokalen Bereichen der Platte auch ohne eine an der Vorrichtung bzw. der Platte angebrachten Mischeinrichtung möglich, zum Beispiel indem auf die Platte durch ein mechanischer Druck einer Antriebseinrichtung ausgeübt wird, z.B, durch einen absenkbaren Stift, der auf die erste Oberfläche der Platte drückt, wodurch die Platte abgesenkt wird, oder ein Unterdruck, z.B, durch einen Ansaugmechanismus einer Antriebseinrichtung, durch den die Platte angehoben wird. Daher Ist eine Mischelnrichtung für ein Anheben und Absenken nicht zwingend erforderlich, aber bevorzugt. Bevorzugte Varianten sind nachfolgend angegeben:

Eine Mischeinrichtung weist vorzugsweise einen kompressionsinduzierenden Mechanismus oder einen spannungsinduzierenden Mechanismus oder eine Kombination davon auf. Kompressionsinduzierende Mechanismen sind beispielsweise mit der Platte verbundene Rollen, Kugeln oder Stifte, welche mit einer Antriebseinrichtung zusammenwirken. Spannungsinduzierende Mechanismen sind beispielsweise mit der Platte verbundene mechanischer Aufsätze, beispielsweise Stifte, die mit einer Antriebseinrichtung zusammenwirken.

Mehrere lokale Bereichen der Platte können angehoben und/oder abgesenkt werden, indem mehrere an verschiedenen Bereichen der Platte lokalisierte Mischmechanismen verwendet werden oder ein bewegbarer Mischmechanismus verwendet wird, der von Bereich zu Bereich bewegt werden kann. Verschiedene lokale Bereiche der Platte können nacheinander angehoben und/oder abgesenkt werden, so dass in der Flüssigkeitskammer eine Wellenbewegung induziert wird, was eine besonders gute Benetzung der Probe zur Folge hat.

In einer vorteilhaften Variante weist die Mischeinrichtung eine oder mehrere an der flexiblen Platte angeordnete Kopplungselemente auf, über welche die Platte an die Antriebseinrichtung gekoppelt wird. In einer speziellen Variante sind die ein oder mehreren Kopplungselemente Magnete, die mit der Platte verbunden sind und die über einen oder mehrerer Gegenmagnete einer Antriebseinrichtung auf- und/oder abwärts bewegbar sind, so dass jeweils ein entsprechender lokaler Bereich der Platte angehoben und abgesenkt wird. Mit einem entsprechenden lokalen Bereich der Platte Ist der Bereich gemeint, an dem ein Magnet angeordnet ist und die Umgebung davon. Wie groß der lokale Bereich Ist, der angehoben wird, hängt vorwiegend von den Materialeingenschaften der flexiblen Platte ab, wie der Dehnbarkeit und Elastizität.

Die ein oder mehreren Gegenmagnete, vorzugsweise Elektromagnete, können so gepolt sein, dass sie die Magnete an oder in der Platte abstoßen, wobei die Platte abgesenkt wird. Oder sie sind so gepolt, dass sie die Magnete an/in der Platte anziehen, wodurch die Platte angehoben wird. Durch Ausschalten oder Entfernung der Magnete kehrt die Platte in ihren Ursprungszustand zurück.

In noch einer Variante ist bei den Gegenmagneten die Polung wechselweise so umkehrbar, dass die Magnete an der flexiblen Platte abwechselnd abgestoßen oder angezogen werden, wodurch die Platte abwechselnd in zeitlicher Abfolge abgesenkt und angehoben wird. Verschiedene Magnete an unterschiedlichen lokalen Bereichen der Platte können in zeitlicher Abfolge durch die zugeordneten Gegenmagneten angehoben und/oder abgesenkt werden, so dass nacheinander verschiedene lokale Bereiche der Platte angehoben und/oder abgesenkt werden.

In einer anderen Ausführungsform sind die Kopplungselemente Hohlräume in der Platte, die eine Öffnung zur ersten Oberfläche der Platte aufweisen und in die passgenaue Gegenelemente der Antriebseinrichtung eingebracht werden oder eingebracht sind, wobei durch eine Aufwärts- und Abwärtsbewegung der Gegenelemente jeweils ein entsprechender Bereich der Platte angehoben und abgesenkt wird. Der Begriff "passgenau" bedeutet, dass der Hohlraum und das entsprechende Gegenelement eine gleiche Form oder eine im Wesentlichen gleiche Form aufweisen. Dadurch wird erreicht, dass nach Einbringen des Gegenelements in den Hohlraum das Gegenelement in Form einer Steckverbindung mit der flexiblen Platte verbunden ist.

In einer bevorzugten Variante haben die Hohlräume die Form einer Hohlkugel mit einer Öffnung zur ersten Oberfläche und die Gegenelemente haben die Form eines Stabes mit einer Kugel an einem Ende des Stabes (Stößelform), wobei die Kugel am Ende des Stabes passgenau in den kugelförmigen Hohlraum der flexiblen Platte einführbar ist. Das andere Ende des Stabes kann mit weiteren Komponenten einer Antriebseinrichtung verbunden sein, wobei die Stößel selbst als Teil der Antriebseinrichtung betrachtet werden. Durch eine Auf- und Abwärtsbewegung der angekoppelten Stößel wird eine Bewegung der flexiblen Platte induziert. Verschiedene Stößel, die an unterschiedlichen lokalen Bereichen der Platte angekoppelt sind, können in zeitlicher Abfolge angehoben und/oder abgesenkt werden, so dass nacheinander verschiedene lokale Bereiche der Platte angehoben und/oder abgesenkt werden.

Wenn die Vorrichtung auf der ersten Oberfläche der Platte angebrachte Stege zur Versteifung aufweist, wie zuvor beschrieben, so beginnen mehrere solcher Stege vorzugsweise an oder neben den Kopplungselementen an der ersten Oberfläche der Platte und erstrecken sich strahlförmig in mehrere Richtungen. Dadurch wird eine Versteifung der Platte erreicht und die Kraft, welche an Stelle des Kopplungselementes einwirkt, wirksam über angrenzende Bereiche der Platte verteilt. Besonders vorteilhaft ist diese Anordnung, wenn die Platte aus Silikon gefertigt ist.

In einem weiteren Aspekt betrifft die Erfindung eine Anordnung zum Untersuchen von Objekten gemäß Anspruch 10.

Der Raum zum Anordnen des Objektes ist vorzugsweise ein vorbestimmter Platz zur Anordnung des Objekts, beispielsweise einer biologischen Probe, oder eines Objektträgers mit einem darauf liegenden Objekt. Der Platz kann eine Heizeinrichtung, beispielsweise eine elektrische Heizplatte, aufweisen, auf welche die Probe oder die Probe mit Objektträger angeordnet wird und mit der die Probe erwärmt werden kann.

Es können mehrere solcher Plätze vorhanden sein, zur Aufnahme mehrerer erfindungsgemäßer Vorrichtungen, wie auch mehrere Antriebseinrichtungen und Anpresseinrichtungen. In einer weiteren Ausführungsform sind mehrere verschiebbare Plätze zur Anordnung einer Probe vorhanden, die einzeln und nacheinander zu einer Anpress- und Antriebseinrichtung verschoben werden können. Dazu können die Plätze beispielsweise auf Schienen verschiebbar gelagert sein. Pro Platz kann aber auch eine Anpress- und Antriebseinrichtung vorgesehen sein.

Die Antriebseinrichtung kann mit einer Mischeinrichtung der Vorrichtung zusammenwirken. Wie bereits erläutert, weist die Mischeinrichtung vorzugsweise einen kompressionsinduzierenden Mechanismus oder einen spannungsinduzierenden Mechanismus oder eine Kombination davon auf. Kompressionsinduzierende Mechanismen sind beispielsweise mit der Platte verbundene Rollen, Kugeln oder Stifte, die mit einer Antriebseinrichtung zusammenwirken. Spannungsinduzierende Mechanismen sind beispielsweise mit der Platte verbundene mechanische Aufsätze, wie beispielsweise Stifte, die mit einer Antriebseinrichtung zusammenwirken.

In einer speziellen Ausführungsform beinhaltet die Anordnung eine erfindungsgemäße Vorrichtung, welche einen oder mehrere Magneten aufweist, sowie eine Antriebseinrichtung mit einem oder mehreren Gegenmagneten zum Anheben und/oder Absenken von einem oder mehreren lokalen Bereichen der flexiblen Platte. Details zu diesem Mechanismus wurden bereits zuvor erläutert.

In einer weiteren speziellen Ausführungsform beinhaltet die Anordnung eine erfindungsgemäße Vorrichtung, welche einen oder mehrere Hohlräume aufweist, und eine Antriebseinrichtung mit einem oder mehreren passgenauen Gegenelementen, die In die Hohlräume eingebracht sind, zum Anheben und/oder Absenken von einem oder mehreren lokalen Bereichen der flexiblen Platte. Spezielle Formen der Hohlräume und der Gegenelemente (Stößel) und der Wirkmechanismus wurden bereits zuvor erläutert.

Eine Anpresseinrichtung ist derart ausgestaltet, dass sie auf die erste Oberfläche der flexiblen Platte im umlaufenden Randbereich aufsetzt und einen Druck ausübt. Die Anpresseinrichtung ist vorzugsweise an die Form der Platte angepasst. Bei einer rechteckigen Platte hat die Anpressvorrichtung somit vorzugsweise eine rechteckige Form, die auf den umlaufenden Randbereich aufgesetzt wird. Bevorzugt ist die Anpresseinrichtung eine mechanische Anpresseinrichtung, beispielsweise eine Klemm-oder Spannvorrichtung, welche beispielsweise über einen Hebel, Einrast- oder Federmechanismus einen Druck auf den umlaufenden Randbereich der Vorrichtung ausübt.

In einer Ausführungsform weist die Anordnung eine Befülleinrichtung auf, die ausgestaltet ist, Flüssigkeit durch zumindest eine der Durchtrittsöffnungen zu der zweiten Seite der Vorrichtung zu leiten, so dass an der zweiten Seite ein Flüssigkeitsraum zwischen der Vorrichtung und dem Objekt gebildet wird, vergrößert wird und/oder befüllt wird. Die Befülleinrichtung weist vorzugsweise eine Pumpe, ein Flüssigkeitsreservoir und Schlauchverbindungen auf. Die Pumpe kann beispielsweise eine Schlaupumpe sein und transportiert definierte Mengen Flüssigkeit vom Reservoir durch eine der Durchtrittsöffnungen der Vorrichtung.

Vorzugsweise weist die Anordnung auch eine Absaugeinrichtung auf, die ausgestaltet ist, Flüssigkeit durch zumindest eine der Durchtrittsöffnungen zu der ersten Seite der Vorrichtung zu leiten, so dass an der zweiten Seite der Flüssigkeitsraum zwischen der Vorrichtung und dem Objekt entleert wird. Die Absaugeinrichtung kann eine Pumpe, ein Flüssigkeitsreservoir für abgesaugte Flüssigkeit und Schlauchverbindungen aufweisen.

Es können verschiedene Befüll- und Absaugeinrichtungen an der Anordnung vorhanden sein, die mit unterschiedlichen flüssigen Medien, welche beispielsweise unterschiedliche Nachweismittel oder Spüllösungen enthalten, ausgestattet sein können. Insbesondere wenn die Anordnung mehrere Plätze zur Aufnahme von Objekten und erfindungsgemäßen Vorrichtungen aufweist, ist eine Anordnung bevorzugt, in der jeder Platz mit einem gleichartigen Untersuchungsobjekt bestückt ist und mit pro Platz eine Befülleinrichtung mit einem jeweils unterschiedlichen Nachweismitteln vorgesehen ist. So können verschiedene Nachweisreaktionen gleichzeitig an gleichartigen Proben durchgeführt werden. In einer anderen Variante ist es denkbar, jeden Platz mit einer unterschiedlichen Probe zu bestücken und an diesen Proben jeweils die gleiche Nachweisreaktion durchzuführen. In diesem Fall ist eine gemeinsame Befülleinrichtung, welche jedem Platz denselben Nachweisstoff zuführt, bevorzugt.

Schließlich betrifft die Erfindung auch Verfahren zum Benetzen von Objekten, insbesondere von biologischen Proben, mit einer Flüssigkeit, die ein Nachweismittel enthalten kann, bei dem
a) eine flexible Platte aus elastischem Material, aufweisend eine erste Oberfläche an einer ersten Seite der Platte, eine zweite Oberfläche an einer zweiten Seite der Platte, wobei die erste Seite und die zweite Seite einander gegenüberliegen, und zwei Durchtrittsöffnungen, die von der ersten Seite zu der zweiten Seite verlaufen, an der zweiten Oberfläche münden und ein Hindurchtreten der Flüssigkeit und/oder von Luft ermöglichen, mit der zweiten Oberfläche auf ein zu benetzendes Objekt gelegt wird,
b) ein Anpressdruck auf einen umlaufenden Randbereich der Platte ausgeübt wird,
c) Flüssigkeit durch zumindest die erste Durchtrittsöffnung von der ersten zu der zweiten Seite geleitet wird, wobei ein Flüssigkeitsraum zwischen der Platte und dem Objekt gebildet und das Objekt benetzt wird.

Bei der Einleitung von Flüssigkeit durch die erste Durchtrittsöffnung kann eventuell vorhandene Luft aus dem Flüssigkeitsraum durch eine zweite Durchtrittsöffnung entweichen.

Nachfolgend wir die Erfindung anhand von Ausführungsbeispielen beschrieben. Es zeigen:
Fig. 1 eine Ansicht einer erfindungsgemäßen Vorrichtung von schräg oben.
Fig. 2 eine Ansicht einer erfindungsgemäßen Vorrichtung von oben.
Fig. 3 einen Schnitt entlang der Achse A-A aus Fig. 2.
Fig. 4 eine Ansicht einer erfindungsgemäßen Vorrichtung von unten.
Fig. 5 einen Schnitt entlang der Achse B-B aus Fig. 4.
Fig. 6 das einen Ausschnitt der Fig. 5 im Detail.
Fig. 7 eine Querschnittsansicht, analog zu Schnitt A-A der Fig. 2, einer erfindungsgemäßen Vorrichtung, welche mit Stößeln versehen ist.
Fig. 8 einen Vertikalschnitt einer erfindungsgemäße Anordnung mit einer erfindungsgemäßen Vorrichtung, die auf ein zu untersuchendes Objekt aufgesetzt ist, einer Antriebseinrichtung und einer Anpresseinrichtung.
Fig. 9 die Detailansicht einer Anpresseinrichtung mit einer magnetischen Antriebseinrichtung.
Fig. 10 eine Anpresseinrichtung mit einer magnetischen Antriebseinrichtung wie in Fig. 9 gezeigt, die in eine erfindungsgemäße Vorrichtung eingesetzt ist.

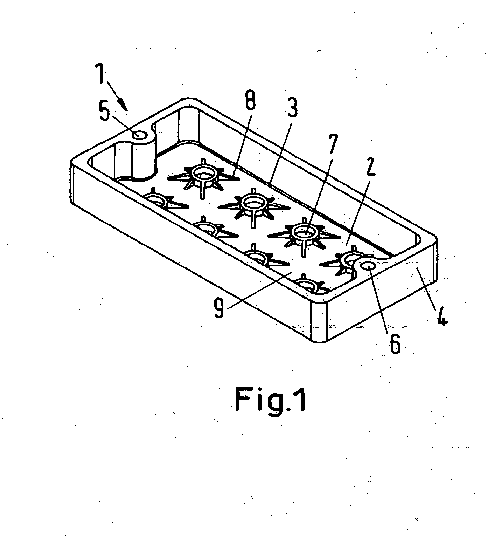

In Fig. 1 ist eine Ansicht einer erfindungsgemäßen Vorrichtung von schräg oben gezeigt. Zu sehen sind eine flexible Platte 2 aus elastischem Material mit dem umlaufenden Randbereich 3, ein Rahmen 4, der einstückig mit der Platte 2 verbunden ist und auf dem umlaufenden Randbereich aufsitzt. Ferner sind zwei Durchtrittsöffnungen 5, 6 zu sehen. Die Durchtrittsöffnungen laufen durch den Rahmen 4, der an diesen Stellen verstärkt ist. An der Platte sind Aussparungen 7 für Mischeinrichtungen angebracht, die sternförmig von Stegen 8 umgeben sind.

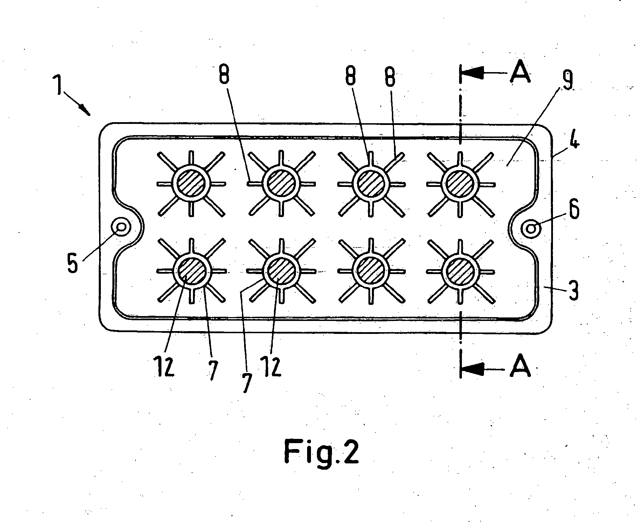

In Fig. 2 ist eine Sicht der Vorrichtung 1 von oben gezeigt. Der Blick fällt auf die die erste Oberfläche 9 auf der ersten Seite der Platte 2. In die Aussparungen 7 für Mischeinrichtungen sind magnetische Kopplungselemente 12 eingesetzt.

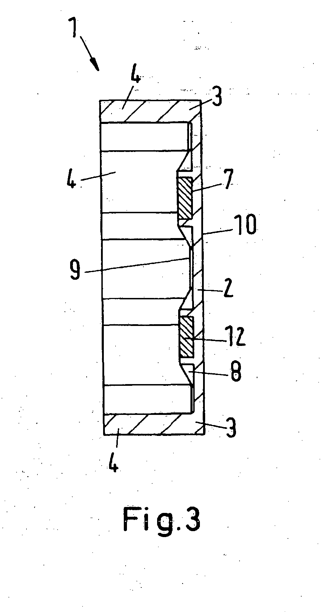

Fig. 3 zeigt einen seitlichen Schnitt entlang der Linie A-A der Fig. 2. Zu erkennen sind neben den bereits erläuterten Elementen die erste Oberfläche 9 auf der ersten Seite der Platte 2, die zweite Oberfläche 10 auf der zweiten Seite der Platte 2. In der Schnittdarstellung sind die magnetischen Kopplungselemente 12 gezeigt.

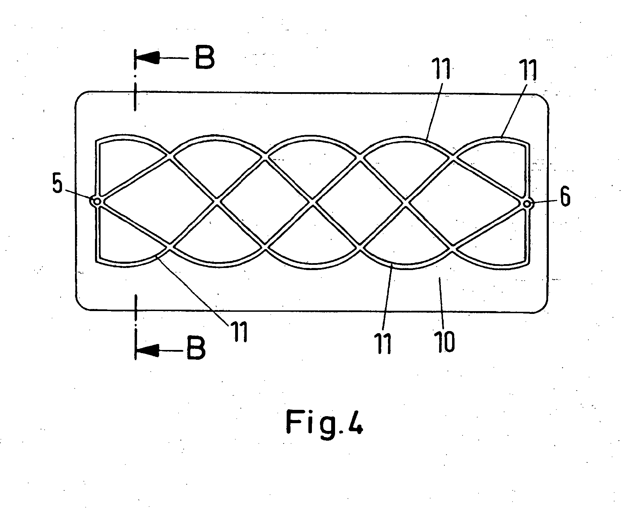

In Fig. 4 ist eine Sicht der Vorrichtung 1 von unten gezeigt. Der Blick fällt auf die die zweite Oberfläche 10 auf der zweiten Seite der Platte 2. Zu erkennen sind die Durchtrittsöffnungen 5, 6, die an der zweiten Oberfläche 10 münden. Entlang der zweiten Seite der Platte 2 erstrecken sich Kanäle 11, welche zur zweiten Oberfläche 10 hin offen sind. Die Durchtrittsöffnungen 5, 6 sind über die Kanäle 11 miteinander verbunden und die Kanäle sind untereinander durch Kreuzungen verbunden.

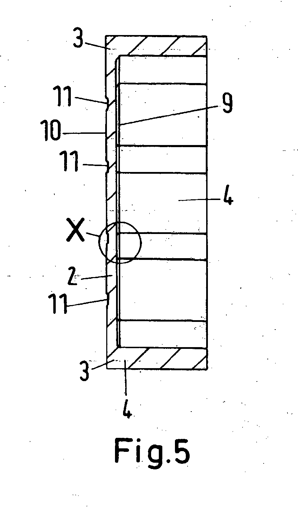

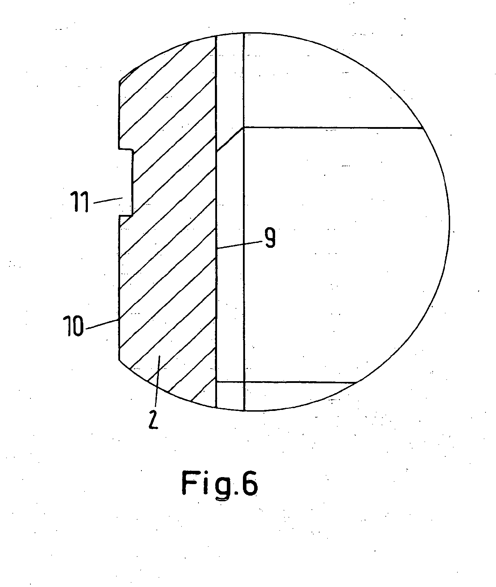

Fig. 5 zeigt einen Schnitt entlang der Linie B-B der Fig. 4, Der Ausschnitt X zeigt den Bereich eines der Kanäle 11. Fig. 6 zeigt den Ausschnitt X in Vergrößerung, in der besonders gut zu sehen ist, dass die Kanäle 11 zur zweiten Oberfläche 10 hin offen sind, somit die Form einer Rinne haben.

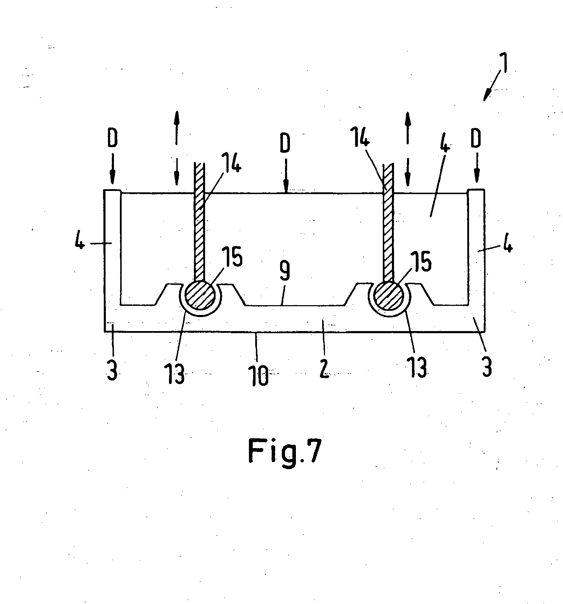

Fig. 7 zeigt eine Querschnittsansicht, analog zum Schnitt A-A der Fig. 3, einer erfindungsgemäßen Vorrichtung, die mit hohlraumförmigen Kopplungselementen 13, welche die passgenauen Gegenelemente 15, hier in Form von Kugeln, der Antriebseinrichtung 14, hier als Stößel ausgeführt, aufnehmen. Die Pfeile neben den Stößeln deuten das Anheben und Absenken der Mischeinrichtung an. Die mit "D" bezeichneten Pfeile über dem Rahmen 4 deuten den Anpressdruck an, der über den Rahmen 4 auf den umlaufenden Randbereich 3 der Vorrichtung 1 ausgeübt wird.

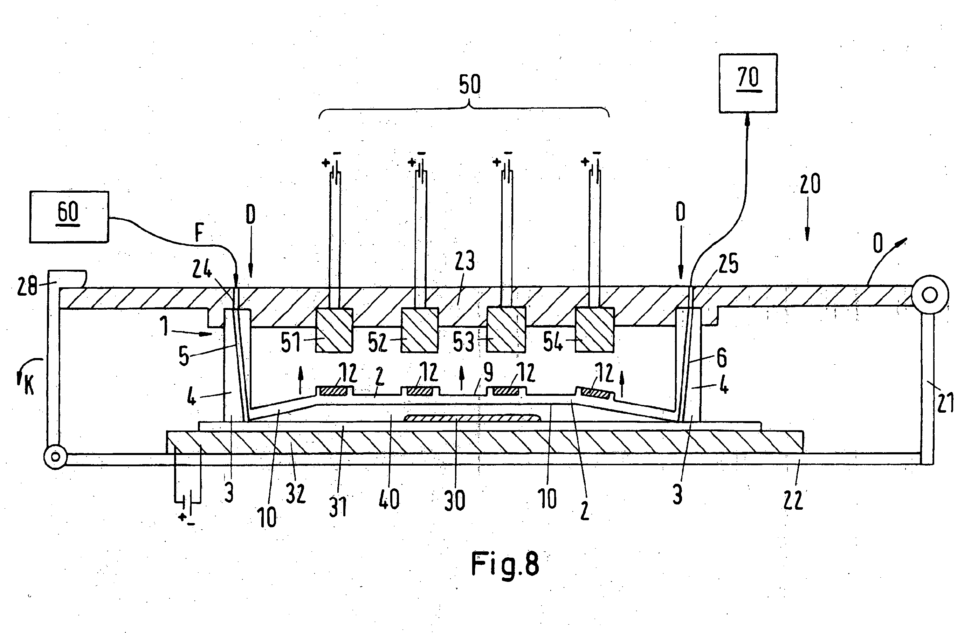

Fig. 8 zeigt eine erfindungsgemäße Anordnung mit einer erfindungsgemäßen Vorrichtung 1, die auf ein zu untersuchendes Objekt 30 aufgesetzt ist, einer Antriebseinrichtung 50 und einer Anpresseinrichtung 20 im Vertikalschnitt. Der Vertikalschnitt durchtrennt in dieser Darstellung zur Verdeutlichung sowohl die Durchtrittsöffnungen 5, 6 als auch die Mischeinrichtung, bestehend aus magnetischen Kopplungselementen 12. Die magnetischen Kopplungselemente 12 und die Durchtrittsöffnungen 5,6 liegen nicht notwendigerweise in einer vertikalen Ebene (vgl. Fig. 2) aber diese Darstellung wurde zur besseren Veranschaulichung gewählt.

In Fig. 8 wurde eine erfindungsgemäße Vorrichtung 1 auf ein Objekt 30 gesetzt, welches sich auf einem Objektträger 31 befindet. Der umlaufende Randbereich 3 der Vorrichtung 1 sitzt auf dem Objektträger 31. Der Objektträger liegt wiederum auf einem Raum 32 zum Anordnen des Objekts 30, hier ausgeführt als elektrisch beheizbare Platte. Die Vorrichtung 1 ist in eine Anpresseinrichtung 20 eingelegt, aufweisend eine Bodenplatte 22, einen senkrechten Arm 21 und einen Anpressarm 23, der am senkrechten Arm 21 angelenkt ist und im heruntergeklappten Zustand, wie gezeigt, einen Anpressdruck auf den Rahmen 4 der Vorrichtung 1 ausübt. Dadurch wird der umlaufende Randbereich 3 der Vorrichtung 1 auf den Objektträger gepresst. Die Bewegung des Anpressarms 23 relativ zum senkrechten Arm, mit welcher der Arm angehoben und die Vorrichtung 1 entnommen werden kann, ist mit dem mit "O" bezeichneten Pfeil angedeutet. Der Anpressarm 23 wird mit einem Fixierarm 28 einrastend verbunden. Der Fixierarm 28 ist an die Bodenplatte angelenkt und die Bewegung des Fixierarms relativ zur Bodenplatte ist mit dem mit "K" bezeichneten Pfeil angedeutet. Durch den Einrastmechanismus des Fixierarms wird ein Anpressdruck des Anpressarms 23 auf den Rahmen 4 der Vorrichtung erzeugt. Der Anpressdruck ist mit den mit "D" bezeichneten Pfeilen angedeutet. An dem Anpressarm ist eine Antriebseinrichtung 50 angebracht, aufweisend Elektromagnete 51, 52, 53, 54.

Durch eine Öffnung 24 im Anpressarm 23 und die daran anschließende Durchtrittsöffnung 5 in der Vorrichtung 1 strömt Flüssigkeit in die ein und tritt an der zweiten Oberfläche 10 der Platte 2 aus. Die Flüssigkeit kann sich durch Kanäle (hier nicht gezeigt) verteilen. Durch den Flüssigkeitsdruck wird die flexible Platte 2 angehoben, wie hier gezeigt, und zwischen der Platte 2 und dem Untersuchungsobjekt 30 wird ein Flüssigkeitsraum 40 gebildet. An der Zuströmseite der Flüssigkeit, angedeutet durch den Pfeil "F", Ist eine Befülleinrichtung 60 angeschlossen, beispielsweise ein System aus Vorratsbehälter, Pumpe und Schlauch (nicht gezeigt).

Die flexible Platte 2 muss nicht so weit nach oben gedehnt werden wie in der Abbildung zur besseren Verdeutlichung gezeigt. Eine Bewegung nach oben, welche gerade zur Verteilung der Flüssigkeit über die Probe ausreichend ist, genügt prinzipiell.

Fig. 8 zeigt eine Antriebseinrichtung 50, aufweisend mehrere Elektromagnete 51, 52, 53, 54. Die Elektromagnete 51, 52, 53, 54 können gemeinsam oder einzeln nacheinander angeschaltet werden und dabei je nach Polung eine Anziehungs- oder Abstoßungskraft auf die magnetischen Kopplungselemente 12 ausüben. Dadurch wird die flexible Platte 2 angehoben und/oder abgesenkt. Wenn die Elektromagnete 51, 52, 53, 54 in zeitlicher Abfolge angesteuert werden, kann die Platte 2 in einzelnen lokalen Bereichen angehoben oder abgesenkt werden und dadurch im Flüssigkeitsraum 40 eine Strömung induziert werden, was eine besonders gute Durchmischung und Benetzung des Objekts 30 bewirkt.

Nach Beendigung der Behandlung des Objekts 30 mit der Flüssigkeit kann die Flüssigkeit im Flüssigkeitsraum 40 durch die Durchtrittsöffnung 6 und die daran anschließende Öffnung 25 im Anpressarm 23 durch eine Absaugeinrichtung 70 wieder aus dem Flüssigkeitsraum 40 entfernt werden. Anschließend kann durch die Öffnung 24 im Anpressarm 23 und die Durchtrittsöffnung 5 neue Flüssigkeit eingefüllt werden, falls gewünscht.

Die erfindungsgemäße Anordnung kann mehrere, beispielsweise nebeneinander angeordnete, Anpresseinrichtungen 20 und Antriebseinrichtungen 50, die jeweils eine Vorrichtung 1 und Probe 30 aufnehmen, aufweisen. Die Vorrichtungen können über eine gemeinsame Befülleinrichtung mit der gleichen oder getrennte Befülleinrichtungen mit verschiedenen Flüssigkeiten befüllt werden.

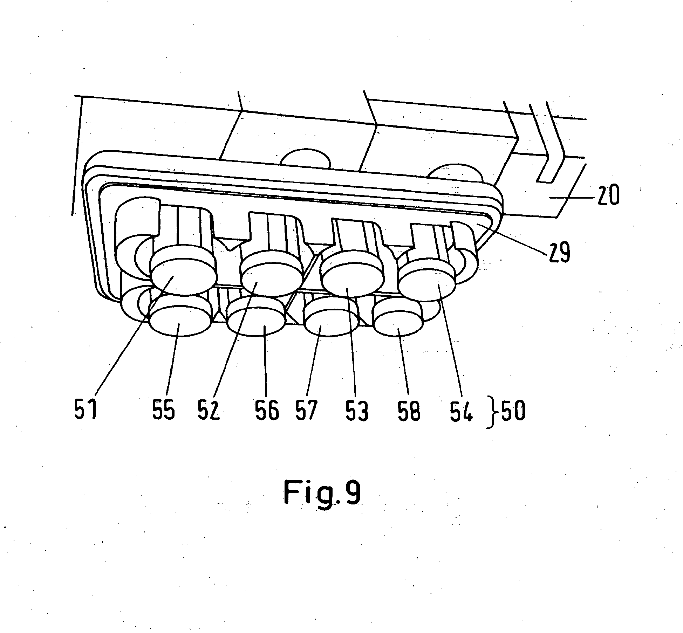

Fig. 9 ist die Detailansicht einer Anpresseinrichtung 20 mit einer magnetischen Antriebseinrichtung 50. Gezeigt ist eine Anpressplatte 29, die Teil eines Anpressarms (nicht gezeigt) sein kann oder mit einem Anpressarm verbunden werden kann, und Elektromagnete 51, 52, 53, 54, 55, 56, 57 und 58 als Antriebseinrichtung.

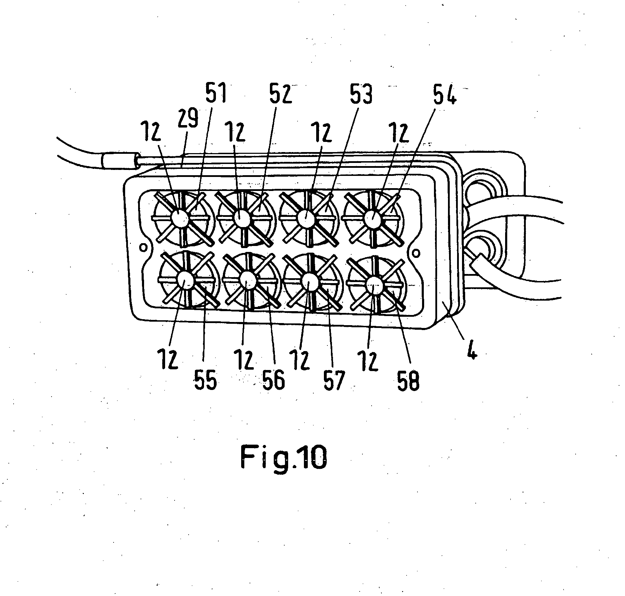

Die Anpressplatte 29 kann auf den Rahmen 4 einer Vorrichtung 1 nach Fig. 1-3 aufgesetzt werden, wie in Fig. 10 gezeigt. Die Elektromagnete 51-58 bilden liegen dann den Magneten 12 der Vorrichtung 1 gegenüber. Gut zu erkennen ist, dass die. Anpressplatte 29 der Anpresseinrichtung 20 in ihrer rechteckigen Form der rechteckigen Form des Rahmens 4 der Vorrichtung entspricht.

## Patentansprüche

1. Vorrichtung zum Benetzen von Objekten, insbesondere von biologischen Proben, mit einer Flüssigkeit, insbesondere einer Flüssigkeit mit einem Nachweismittel, wobei:
- die Vorrichtung eine flexible Platte (3) aus elastischem Material aufweist,
- die Platte eine erste Oberfläche (9) an einer ersten Seite der Platte und eine zweite Oberfläche (10) an einer zweiten Seite der Platte aufweist, wobei die erste Seite und die zweite Seite einander gegenüberliegen,
- in der Vorrichtung zumindest zwei Durchtrittsöffnungen (5, 6) vorhanden sind, die von der ersten Seite zu der zweiten Seite verlaufen, an der zweiten Oberfläche (10) münden und ein Hindurchtreten der Flüssigkeit und/oder von Luft ermöglichen.
**dadurch gekennzeichnet, dass**
die Platte mit der zweiten Oberfläche (10) auf das zu benetzende Objekt (30) auflegbar ist, und die Platte in einem umlaufenden Randbereich (3) auf die Oberfläche eines Objektträgers (31) auflegbar ist, sodass im Randbereich die zweite Oberfläche (10) der Platte den Objektträger (31) berührt und die zweite Oberfläche (10) das Objekt bedeckt,
und durch Ausübung eines Anpressdrucks auf den umlaufenden Randbereich (3) der Platte (2), und Hindurchtreten von Flüssigkeit von der ersten Seite durch zumindest eine der Durchtrittsöffnungen(5, 6) zu der zweiten Seite an der zweiten Seite ein Flüssigkeitsraum (40) zwischen der Platte(2) und dem Objekt (30) erzeugbar ist.

2. Vorrichtung nach Anspruch 1, bei der die Platte einstückig mit einem Rahmen (4) verbunden ist, der an der ersten Seite hervorragt, sodass der Anpressdruck über den Rahmen ausübbar ist.

3. Vorrichtung nach einem der vorhergehenden Ansprüche, bei der die Platte auf der ersten Oberfläche (10) angebrachte Stege (8) zur Versteifung aufweist.

4. Vorrichtung nach einem der vorhergehenden Ansprüche, aufweisend einen oder mehrere Kanäle (11), die sich entlang der zweiten Seite erstrecken, zur zweiten Oberfläche (10) hin offen sind.

5. Vorrichtung nach Anspruch 4, bei der die Kanäle mit den Durchtrittsöffnungen (5,6) in der Platte verbunden sind.

6. Vorrichtung nach einem der vorhergehenden Ansprüche, aufweisend eine Mischeinrichtung, die bei Zusammenwirken mit einer Antriebseinrichtung (14; 50) ein Anheben und/oder Absenken von einem oder mehreren lokalen Bereichen der Platte bewirkt, wobei die lokalen Bereiche den Flüssigkeitsraum (40) beranden, sodass durch das Anheben und/oder Absenken die Flüssigkeit in dem Flüssigkeitsraum bewegt wird.

7. Vorrichtung nach Anspruch 6, bei der die Mischeinrichtung eine oder mehrere an der Platte angeordnete Kopplungselemente (12; 13) aufweist, über welche die Platte an die Antriebseinrichtung (14) gekoppelt wird.

8. Vorrichtung nach Anspruch 7, bei der die ein oder mehreren Kopplungselemente Magnete (12) sind, die mit der Platte verbunden sind und die über ein oder mehrerer Gegenmagnete (51, 52, 53, 54, 55) der Antriebseinrichtung (50) auf- und abwärts bewegbar sind, so dass jeweils ein entsprechender lokaler Bereich der Platte angehoben und abgesenkt wird.

9. Vorrichtung nach Anspruch 7, bei der die Kopplungselemente Hohlräume (13) in der Platte (2) sind, die eine Öffnung zur ersten Oberfläche der Platte aufweisen und in die passgenaue Gegenelemente (15) der Antriebseinrichtung (14) eingebracht werden oder eingebracht sind, wobei durch eine Aufwärts- und Abwärtsbewegung der Gegenelemente jeweils ein entsprechender lokaler Bereich der Platte angehoben und abgesenkt wird.

10. Anordnung zum Untersuchen von Objekten, insbesondere von biologischen Proben, unter Benetzung des Objekts mit einer Flüssigkeit, insbesondere einer Flüssigkeit mit einem Nachweismittel, wobei die Anordnung aufweist:
- einen Raum (32) zum Anordnen des Objektes (30),
- eine Vorrichtung (1) nach einem der vorhergehenden Ansprüche 1-9,
- eine Antriebseinrichtung (14; 50) zum Anheben und/oder Absenken von einem oder mehreren lokalen Bereichen der flexiblen Platte (2) der Vorrichtung (1),
- eine Anpresseinrichtung (20) zum Erzeugen eines Anpressdruckes, wobei die Anpresseinrichtung, das Objekt und die Vorrichtung derart angeordnet und ausgestaltet sind, dass
- die Platte mit der zweiten Oberfläche (10) auf das zu benetzende Objekt auflegbar ist und
- die Platte in einem umlaufenden Randbereich (3) auf die Oberfläche eines Objektträgers (31) auflegbar ist, sodass im Randbereich die zweite Oberfläche (10) der Platte den Objektträger (31) berührt und die zweite Oberfläche (10) das Objekt bedeckt, und
- durch die Anpresseinrichtung ein Anpressdruck auf einen umlaufenden Randbereich (3) der Platte(2) ausübbar ist.

11. Anordnung nach Anspruch 10, wobei die Anordnung eine Befülleinrichtung (60) aufweist, die ausgestaltet ist, Flüssigkeit durch zumindest eine der Durchtrittsöffnungen (5,6) zur zweiten Seite der Vorrichtung zu leiten, so dass an der zweiten Seite ein Flüssigkeitsraum (40) zwischen der flexiblen Platte(2) und dem Objekt (30) gebildet wird, vergrößert wird und/oder befüllt wird.

12. Anordnung nach Anspruch 10 oder 11, wobei die Anordnung eine Absaugeinrichtung (70) aufweist, die ausgestaltet ist, Flüssigkeit durch zumindest eine der Durchtrittsöffnungen (5,6) zu der ersten Seite der Vorrichtung zu leiten, so dass an der zweiten Seite der Flüssigkeitsraum zwischen der flexiblen Platte(2) und dem Objekt (30) entleert wird.

13. Anordnung nach einem der Ansprüche 10-12, aufweisend eine Vorrichtung nach Anspruch 9, aufweisend einen oder mehrere Magnete (12) und eine Antriebseinrichtung (50) mit einem oder mehreren Gegenmagneten (51, 52; 53, 54) zum Anheben und/oder Absenken von einem oder mehreren lokalen Bereichen der flexiblen Platte (2).

14. Anordnung nach einem der einem der Ansprüche 10-12, aufweisend eine Vorrichtung nach Anspruch 10, aufweisend einen oder mehrere Hohlräume (13) und eine Antriebseinrichtung (14) mit einem oder mehreren passgenauen Gegenelementen (15), die in die Hohlräume eingebracht sind, zum Anheben und/oder Absenken von einem oder mehreren lokalen Bereichen der flexiblen Platte (2).

15. Verfahren zum Benetzen von Objekten, insbesondere von biologischen Proben, mit einer Flüssigkeit, die ein Nachweismittel enthalten kann, bei dem
a) eine flexible Platte (3) aus elastischem Material, aufweisend eine erste Oberfläche (9) an einer ersten Seite der Platte, eine zweite Oberfläche (10) an einer zweiten Seite der Platte, wobei die erste Seite und die zweite Seite einander gegenüberliegen, und zwei Durchtrittsöffnungen (5, 6), die von der ersten Seite zu der zweiten Seite verlaufen, an der zweiten Oberfläche (10) münden und ein Hindurchtreten der Flüssigkeit und/oder von Luft ermöglichen, mit der zweiten Oberfläche auf ein zu benetzendes Objekt (30) gelegt wird,
b) ein Anpressdruck auf einen umlaufenden Randbereich (3) der Platte (2) ausgeübt wird,
c) Flüssigkeit durch zumindest die erste Durchtrittsöffnung (5) von der ersten zu der zweiten Seite geleitet wird, wobei ein Flüssigkeitsraum (40) zwischen der Platte (2) und dem Objekt (30) gebildet und das Objekt benetzt wird.

## Claims

1. Device for wetting objects, in particular biological samples, with a fluid, in particular a fluid having a means of detection, wherein
- the device has a flexible plate (3) made from elastic material,
- the plate has a first surface (9) on a first side of the plate and a second surface (10) on a second side of the plate, wherein the first side and the second side are opposite each other,
- at least two passages (5, 6) are present in the device, which run from the first side to the second side, lead to the second surface (10) and enable an ingress of the fluid and/or of air,
**characterised in that**
the plate is able to be applied, with its second surface (10), to the object (30) to be wetted, and the plate is able to be applied, in a circumferential edge region (3), to the surface of an object carrier (31), such that the second surface (10) of the plate touches the object carrier (31) in the edge region and the second surface (10) covers the object,
and a fluid space (40) is able to be generated between the plate (2) and the object (30) on the second side by exertion of a contact pressure onto the circumferential edge region (3) of the plate (2), and ingress of fluid from the first side, through at least one of the passages (5, 6), to the second side.

2. Device according to claim 1, wherein the plate is connected in one piece to a frame (4) which protrudes on the first side, such that the contact pressure can be exerted via the frame.

3. Device according to one of the preceding claims, wherein the plate has bars (8) attached to the first surface (10) for stiffening.

4. Device according to one of the preceding claims, having one or more channels (11) which extend along the second side, and which are open towards the second surface (10).

5. Device according to claim 4, wherein the channels are connected to the passages (5, 6) in the plate.

6. Device according to one of the preceding claims, having a mixing device which, during interaction with a drive device (14; 50), causes a raising and/or lowering of one or more local regions of the plate, wherein the local regions delineate the fluid space (40), such that the fluid in the fluid space is moved by the raising and/or lowering.

7. Device according to claim 6, wherein the mixing device has one or more coupling elements (12; 13) arranged on the plate, via which the plate is coupled to the drive device (14).

8. Device according to claim 7, wherein the one or more coupling elements are magnets (12) which are connected to the plate and which are able to be moved upwards and downwards via one or more counter magnets (51, 52, 53, 54, 55) of the drive device (50), such that each corresponding local region of the plate is lifted and lowered.

9. Device according to claim 7, wherein the coupling elements are hollow spaces (13) in the plate (2), said hollow spaces having an opening to the first surface of the plate and are or become introduced into the custom-fit counter elements (15) of the drive device (14), wherein each corresponding local region of the plate is raised and lowered by an upwards and downwards movement of the counter elements.

10. Arrangement for the examination of objects, in particular biological samples, by wetting the object with a fluid, in particular a fluid having a means of detection, wherein the arrangement has:
- a space (32) for arrangement of the object (30),
- a device (1) according to one of the preceding claims 1-9,
- a drive device (14; 50) for raising and/or lowering one or more local regions of the flexible plate (2) of the device (1),
- a pressing device (20) for generating a contact pressure,
wherein the pressing device, the object and the device are arranged and designed in such a way that
- the plate is able to be applied to the object to be wetted with its second surface (10) and
- the plate is able to be applied, in a circumferential edge region (3), to the surface of an object carrier (31), such that the second surface (10) of the plate touches the object carrier (31) in the edge region and the second surface (10) covers the object, and
- a contact pressure is able to be exerted onto a circumferential edge region (3) of the plate (2) by the pressing device.

11. Arrangement according to claim 10, wherein the arrangement has a filling device (60) which is designed to guide fluid through at least one of the passages (5, 6) to the second side of the device, such that a fluid space (40) is formed, is enlarged and/or is filled between the flexible plate (2) and the object (30) on the second side.

12. Arrangement according to claim 10 or 11, wherein the arrangement has a suction device (70) which is designed to guide fluid through at least one of the passages (5, 6) to the first side of the device, such that the fluid space between the flexible plate (2) and the object (30) is emptied on the second side.

13. Arrangement according to one of claims 10 to 12, having a device according to claim 9, having one or more magnets (12) and a drive device (50) having one or more counter magnets (51, 52, 53, 54) for raising and/or lowering one or more local regions of the flexible plate (2).

14. Arrangement according to one of claims 10 to 12, having a device according to claim 10, having one or more hollow spaces (13) and a drive device (14) having one or more custom-fit counter elements (15) which are introduced into the hollow spaces, for raising and/or lowering one or more local regions of the flexible plate (2).

15. Method for wetting objects, in particular biological samples, with a fluid, which can contain a means of detection, wherein
a) a flexible plate (3) made from elastic material, having a first surface (9) on a first side of the plate, a second surface (10) on a second side of the plate, wherein the first side and the second side are opposite each other, and two passages (5,6) which run from the first side to the second side, lead to the second surface (10) and enable an ingress of the fluid and/or of air, is placed on an object (30) to be wetted with its second surface,
b) a contact pressure is exerted onto a circumferential edge region (3) of the plate (2),
c) fluid is guided through at least the first passage (5) from the first to the second side, wherein a fluid space (40) is formed between the plate (2) and the object (30) and the object is wetted.

## Revendications

1. Dispositif d'humidification d'objets, en particulier d'échantillons biologiques, avec un liquide, en particulier un liquide ayant un moyen d'indication,
- le dispositif comprenant une plaque (2) flexible faite d'un matériau élastique,
- la plaque comprenant une première surface (9) sur une première face de la plaque et une seconde surface (10) sur une seconde face de la plaque, la première face et la seconde face étant opposées l'une à l'autre,
- dans le dispositif étant présents au moins deux orifices de passage (5, 6) qui vont de la première face à la seconde face, débouchent sur la seconde surface (10) et permettent un transit du liquide et/ou d'air,
**caractérisé en ce que**
la plaque peut être déposée avec la seconde surface (10) sur l'objet à humidifier (30), et
la plaque peut être déposée sur la surface d'un support d'objet (31) par une zone de bord périphérique (3) de sorte que, dans la zone de bord, la seconde surface (10) de la plaque touche le support d'objet (31) et la seconde surface (10) recouvre l'objet, et
par l'exercice d'une force de pression sur la zone de bord périphérique (3) de la plaque (2) et par le transit du liquide de la première face à la seconde face par au moins un des orifices de passage (5, 6), un espace de liquide (40) peut être produit sur la seconde face entre la plaque (2) et l'objet (30).

2. Dispositif selon la revendication 1, dans lequel la plaque est reliée solidairement à un cadre (4) qui fait saillie sur la première face de sorte que la force de pression puisse être exercée par le biais du cadre.

3. Dispositif selon l'une quelconque des revendications précédentes, dans lequel la plaque comprend des nervures (8) installées sur la première surface (10) à des fins de raidissement.

4. Dispositif selon l'une quelconque des revendications précédentes, comprenant un ou plusieurs canaux (11) qui s'étendent le long de la seconde face et qui sont ouverts vers la seconde surface (10).

5. Dispositif selon la revendication 4, dans lequel les canaux sont reliés aux orifices de passage (5, 6) dans la plaque.

6. Dispositif selon l'une quelconque des revendications précédentes, comprenant un système mélangeur qui, en coopération avec un système d'entraînement (14 ; 50), provoque un soulèvement et/ou un abaissement d'une ou de plusieurs zones locales de la plaque, les zones locales bordant l'espace de liquide (40) de sorte que le liquide soit déplacé dans l'espace de liquide par le soulèvement et/ou l'abaissement.

7. Dispositif selon la revendication 6, dans lequel le système mélangeur comprend un ou plusieurs éléments de couplage (12 ; 13) agencés sur la plaque par le biais desquels la plaque est couplée au système d'entraînement (14) .

8. Dispositif selon la revendication 7, dans lequel les un ou plusieurs éléments de couplage sont des aimants (12) qui sont reliés à la plaque et qui peuvent être déplacés vers le haut et vers le bas par le biais d'un ou de plusieurs contre-aimants (51, 52, 53, 54, 55) du système d'entraînement (50) de sorte que respectivement une zone locale correspondante puisse être soulevée et abaissée.

9. Dispositif selon la revendication 7, dans lequel les éléments de couplage sont des espaces creux (13) dans la plaque (2) qui comprennent une ouverture vers la première surface de la plaque et sont introduits dans les contre-éléments parfaitement adaptés (15) du système d'entraînement (14), respectivement une zone locale correspondante de la plaque étant soulevée et abaissée par un mouvement vers le haut ou vers le bas des contre-éléments.

10. Agencement d'analyse d'objets, en particulier d'échantillons biologiques, par humidification de l'objet avec un liquide, en particulier un liquide ayant un moyen d'indication, l'agencement comprenant :
- un espace (32) destiné à l'agencement de l'objet (30),
- un dispositif (1) selon l'une quelconque des revendications précédentes 1 à 9,
- un système d'entraînement (14 ; 50) destiné au soulèvement et/ou à l'abaissement d'une ou de plusieurs zones locales de la plaque (2) flexible du dispositif (1),
- un système de pression (20) destiné à produire une force de pression, le système de pression, l'objet et le dispositif étant agencés et conçus de sorte que
- la plaque puisse être déposée avec la seconde surface (10) sur l'objet à humidifier et
- la plaque puisse être déposée sur la surface d'un support d'objet (31) dans une zone de bord périphérique (3) de sorte que la seconde surface (10) de la plaque touche le support d'objet (31) dans la zone de bord et que la seconde surface (10) recouvre l'objet, et
- une force de pression puisse être exercée par le système de pression sur une zone de bord périphérique (3) de la plaque(2).

11. Agencement selon la revendication 10, l'agencement comprenant un système de remplissage (60) qui est conçu pour amener du liquide par au moins un des orifices de passage (5,6) vers la seconde face du dispositif de sorte que, sur la seconde face, un espace de liquide (40) soit formé entre la plaque flexible (2) et l'objet (30), soit agrandi et/ou rempli.

12. Agencement selon la revendication 10 ou 11, l'agencement comprenant un système d'aspiration (70) qui est conçu pour amener du liquide par au moins un des orifices de passage (5,6) vers la première face du dispositif de sorte que, sur la seconde face, l'espace de liquide entre la plaque (2) flexible et l'objet (30) soit vidé.

13. Agencement selon l'une quelconque des revendications 10 à 12, comprenant
un dispositif selon la revendication 9, comprenant un ou plusieurs aimants (12) et un système d'entraînement (50) ayant un ou plusieurs contre-aimants (51, 52 ; 53, 54) pour le soulèvement et/ou l'abaissement d'une ou de plusieurs zones locales de la plaque (2) flexible.

14. Agencement selon l'une quelconque des revendications 10 à 12, comprenant
un dispositif selon la revendication 10, comprenant un ou plusieurs espaces creux (13) et un système d'entraînement (14) ayant un ou plusieurs contre-éléments parfaitement adaptés (15) qui sont introduits dans les espaces creux en vue du soulèvement et/ou de l'abaissement d'une ou de plusieurs zones locales de la plaque (2) flexible.

15. Procédé d'humidification d'objets, en particulier d'échantillons biologiques, avec un liquide qui peut contenir un moyen d'indication, dans lequel
a) une plaque (3) flexible faite d'un matériau élastique, comprenant une première surface (9) sur une première face de la plaque, une seconde surface (10) sur une seconde face de la plaque, la première face et la seconde face étant opposées l'une à l'autre, et deux orifices de passage (5, 6) qui vont de la première face à la seconde face, débouchent sur la seconde surface (10) et permettent un transit du liquide et/ou d'air, est posée avec la seconde surface sur un objet à humidifier (30),
b) une force de pression est exercée sur une zone de bord périphérique (3) de la plaque (2),
c) du liquide est amené par au moins le premier orifice de passage (5) de la première à la seconde face, un espace de liquide (40) étant formé entre la plaque (2) et l'objet (30) et l'objet étant humidifié.
